# EUROPEAN PATENT SPECIFICATION

(11) **EP 4 063 898 B1**
(45) Date of publication and mention of the grant of the patent: **11.12.2024**
(21) Application number: 21165084.1
(22) Date of filing: 26.03.2021
(51) Int. Cl.: G01S 7/48, G01S 17/58, G01S 17/89

(54) **LIDAR USING DELAYED PROJECTION PATTERN TO TRACK OBJECTS**
LIDAR MIT VERZÖGERTEN PROJEKTIONSMUSTERN ZUR OBJEKTVERFOLGUNG
LIDAR UTILISANT UN MODÈLE DE PROJECTION RETARDÉ POUR SUIVRE DES OBJETS

(43) Date of publication of application: 28.09.2022
(73) Proprietor: Nokia Technologies Oy, 02610 Espoo (FI)
(72) Inventor: SCHNABEL, William, Farnham, Surrey GU9 8DH (GB); WRIGHT, Christopher, London, E15 4AD (GB); CRONIN, Harry, Cambridge, CB1 3DE (GB); CATTON, Phil, Cambridge, Cambridgeshire CB4 0GA, (GB)
(74) Representative: Swindell & Pearson Limited

(56) References cited:
- US-A1- 2014 210 996
- US-A1- 2019 383 942

## Description

### TECHNOLOGICAL FIELD

Examples of the disclosure relate to apparatus, methods and computer programs for using LiDAR (Light Detection and Ranging). Some relate to apparatus, methods and computer programs for using LiDAR to measure or track objects.

### BACKGROUND

LiDAR can be used to measure or track objects. For example, a user device such as a phone, that is equipped with LiDAR, can detect objects such as people in the region around the user device. LiDAR can be used to monitor the relative movement between the objects and the user device, to identify the type of objects or for any other suitable purpose. The resolution of such LiDAR devices can be limited by the LiDAR hardware within the device. This can limit the accuracy of the LiDAR and restrict the applications for which the LiDAR can be used.

US 2019/383942 A1 (D1) relates to a LIDAR-only lock-on tracking system that uses multiple beams arranged in a pattern, or a signal-of-interest (SOI) array, such that the beams do not move appreciably relative to the target during data gathering.

US 2014/210996 A1 (D2) relates to a method of accurately projecting a laser pattern on a target or work surface and continuously compensating for relative dynamic movement between the laser projector and the target's surface.

### BRIEF SUMMARY

According to various, but not necessarily all, examples of the disclosure there is provided an apparatus comprising means for:
detecting relative movement between at least one object and at least one LiDAR device wherein the at least one LiDAR device is configured to provide a measurement location projection pattern;
predicting a location of at least one area of interest of the at least one object relative to the at least one LiDAR device at a given time; and
adding a delay to transmission of the measurement location projection pattern so that one or more measurement locations of the measurement location projection pattern are incident on the at least one area of interest of the at least one object at the given time.

The means may be for identifying the at least one areas of interest of the at least one object.

The means may be for using images obtained by an imaging device to predict the location of the at least one area of interest of the at least one object.

The means may be for using information obtained from the at least one LiDAR device to predict the location of the at least one area of interest of the at least one object.

The at least one object may comprise at least part of a person and the location of the area of interest of at least one object is predicted using predictions based on human behaviour.

The location of the at least one area of interest relative to the at least one LiDAR device may be estimated using information obtained from one or more sensors configured to measure movement of the at least one LiDAR device.

The means may be for estimating the delay to be added to the transmission of the measurement location projection pattern by calculating one or more expected positions of the at least one area of interest based on the relative velocity between the at least one object and the LiDAR device, calculating a spatial shift for the measurement location projection pattern based on this relative velocity and the current and desired projected measurement locations, and calculating a corresponding time delay to produce the spatial shift.

The apparatus may comprise means for causing movement of at least part of the at least one LiDAR device to provide relative movement between the at least one object and the at least one LiDAR device.

The means may be for detecting relative movement between a plurality of objects and the at least one LiDAR device and predicting a location of at least one area of interest for at least some of the plurality of objects and adding a delay to transmission of the measurement location projection pattern to optimise the incidence of measurement locations from the measurement location projection pattern on the areas of interest for the at least some of the plurality of objects.

The means may be for interpolating between consecutive measurements detected by the at least one LiDAR device to account for the delay added to the transmission of the measurement location projection pattern.

The measurement location projection pattern may comprise an array of evenly spaced measurement locations.

According to various, but not necessarily all, examples of the disclosure there is provided an apparatus comprising at least one processor; and at least one memory including computer program code, the at least one memory and the computer program code configured to, with the at least one processor, cause the apparatus at least to perform:
detecting relative movement between at least one object and at least one LiDAR device wherein the at least one LiDAR device is configured to provide a measurement location projection pattern;
predicting a location of at least one area of interest of the at least one object relative to the at least one LiDAR device at a given time; and
adding a delay to transmission of the measurement location projection pattern so that one or more measurement locations of the measurement location projection pattern are incident on the at least one area of interest of the at least one object at the given time.

An electronic device comprising an apparatus as described herein.

A communications device comprising an apparatus as described herein.

A vehicle comprising an apparatus as described herein.

According to various, but not necessarily all, examples of the disclosure there is provided a method comprising:
detecting relative movement between at least one object and at least one LiDAR device wherein the at least one LiDAR device is configured to provide a measurement location projection pattern;
predicting a location of at least one area of interest of the at least one object relative to the at least one LiDAR device at a given time; and
adding a delay to transmission of the measurement location projection pattern so that one or more measurement locations of the measurement location projection pattern are incident on the at least one area of interest of the at least one object at the given time.

According to various, but not necessarily all, examples of the disclosure there is provided a computer program comprising computer program instructions that, when executed by processing circuitry, cause:
detecting relative movement between at least one object and at least one LiDAR device wherein the at least one LiDAR device is configured to provide a measurement location projection pattern;
predicting a location of at least one area of interest of the at least one object relative to the at least one LiDAR device at a given time; and
adding a delay to transmission of the measurement location projection pattern so that one or more measurement locations of the measurement location projection pattern are incident on the at least one area of interest of the at least one object at the given time.

### BRIEF DESCRIPTION

Some examples will now be described with reference to the accompanying drawings in which:
FIG. 1 shows an example device;
FIG. 2 shows an example apparatus;
FIG. 3 shows an example method;
FIGS. 4A to 4C show an example device in use; and
FIG. 5 shows another example method

### DETAILED DESCRIPTION

LiDAR devices can be provided in user devices such as mobile phones or in other types of devices such as vehicles. The LiDAR devices can be used to identify nearby objects and/or to determine the relative positions of the objects. In some examples the LiDAR devices can be used to track the relative positions of the objects and the LiDAR devices. The resolution of the LiDAR devices is limited by the hardware of the LiDAR device and the device comprising the LiDAR device. Examples of the disclosure provide improved resolution of the LiDAR by adding a delay to the transmission of a measurement location projection pattern of the LiDAR device.

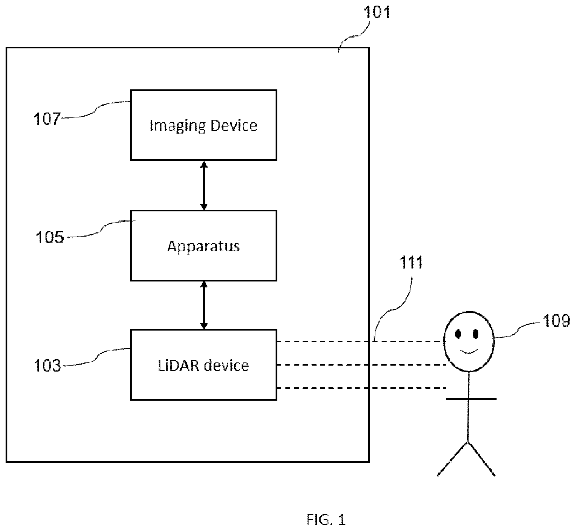

Fig. 1 shows an example device 101 that could be used to implement examples of the disclosure. The device 101 comprises a LiDAR device 103, an apparatus 105 and an imaging device 107. The device 101 could be a user device such as a mobile phone or other personal communication device. In some examples the device 101 could be provided as part of a vehicle or other autonomous device.

In the example shown in Fig. 1 the LiDAR device 103 is being used to measure an object 109. In this example the object 109 is a person. Other types of objects could be measured in other examples of the disclosure.

The LiDAR device 103 can comprise any means that can be configured to use LiDAR signals to measure one or more objects 109. The LiDAR device 103 can be used to detect the distance and position of one or more objects 109, to identify one or more objects 109 or for any other suitable purpose.

The LiDAR device 103 can be configured to measure areas of interest of the object 109. This can help to identify the objects 109, and/or can enable the objects 109 to be identified more accurately. The areas of interest can comprise an area of the object 109 in which there are more variations or complex information compared to other areas of the object 109. For example, In Fig. 1 the object 109 comprises the face of a person. The area around the nose has a larger variation in depth compared to the cheeks. This can enable more information to be obtained from the area around the nose than from the cheeks. In such examples the areas of interest would comprise the areas around the nose.

In some examples the area of interest of an object 109 could comprise part of the object 109. In other examples the area of interest could comprise the whole of the object 109 or substantially the whole of the object 109.

The LiDAR device 103 is configured to transmit pulses of light from a laser or other suitable light source. The reflections of the light from the one or more objects 109 can be detected and used to measure or provide information about the one or more objects 109.

The LiDAR device 103 can be configured to transmit a measurement location projection pattern 111. The measurement location projection pattern 111 can comprise a plurality of measurement locations that are transmitted by the LiDAR device 103. The measurement locations can be one or more areas of light. The measurement locations can be areas of light transmitted from a laser or any other suitable light source.

The areas of light within the measurement location projection pattern 111 can have any suitable shape. In some examples the areas of light can comprise a plurality of dots and the dots can be provided in an array to provide a dot projection pattern.

The areas of light within the measurement location projection pattern 111 can be arranged in any suitable pattern. In some examples the areas of light can be arranged in a regular array comprising a series of regularly spaced columns and rows. Other types of arrays could be used in other examples of the disclosure, for example the arrays could comprise a sequence of concentric circles or any other suitable geometric patterns. The measurement location projection pattern 111 can comprise an array of evenly spaced, or substantially evenly spaced, measurement locations.

When the measurement location projection pattern 111 is incident on an object 109 the light is reflected back towards the LiDAR device 103 or any other suitable detection means. The LiDAR device 103, or any other suitable detection means, can detect the reflected light and use the timings of the reception of the reflected light signals to measure the location of the object 109. This information can be used to identify the object 109 or to distinguish one type of object from another type of object. The identification of the objects 109 could be via the application of an object detection algorithm on the geometries detected and mapped by data obtained by the LiDAR device 103.

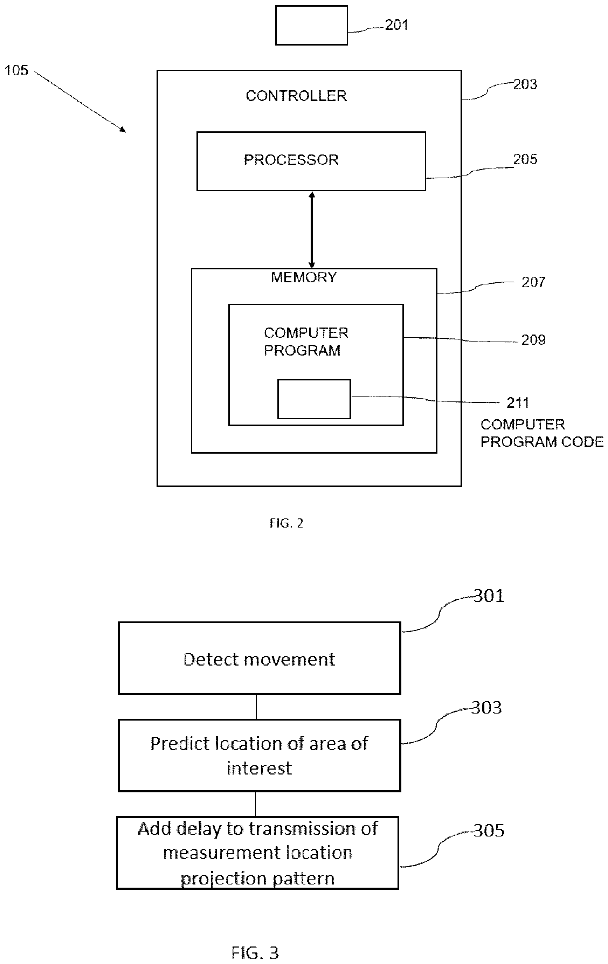

The apparatus 105 that is provided within the device 101 can comprise a controller 203 comprising a processor 205 and memory 207 that can be as shown in Fig. 2. The apparatus 105 can be configured to enable control of the device 101. For example, the apparatus 105 can be configured to control the LiDAR device 103 to enable measurement of one or more objects. The apparatus 105 can also be configured to control the images that are captured by the imaging device 107 and/or to control any other functions that could be implemented by the device 101.

The imaging device 107 can comprise any means for capturing an image. The imaging device 107 can comprise one or more cameras or any other suitable means for capturing images. In the example of Fig.1 only one imaging device 107 is shown. However, it is to be appreciated that the device 101 could comprise a plurality of imaging devices 107 that could be positioned in different locations within the device 101. For example, the device 101 could comprise a front facing imaging device 107 and a rear facing imaging device 107.

The imaging device 107 can comprise one or more sensors where the sensors can be configured to detect images. The sensors of the imaging device 107 can be coupled to the apparatus 105 to enable detected images to be stored in an image storage module. In some examples the image storage module could be part of the memory 207 of the apparatus 105. The sensors of the imaging device 107 can comprise any suitable type of image sensor. For instance, the sensor of the imaging device 107 can comprise a digital image sensor such as a charge-coupled-device (CCD) or a complementary metal-oxide-semiconductor (CMOS).

The imaging device 107 can be controlled by the apparatus 105 to enable images to be captured. Once an image has been captured it can be stored in the image storage module and/or transmitted to a third party. The images that are captured by the imaging device 107 can be used to identify objects 109 within an image and/or to enable tracking of the objects 109. The tracking of the objects 109 comprises determining how the position of the object 109 changes over a period of time. In some examples the tracking of the object 109 can comprise determining a trajectory of the object 109.

Only components of the device 101 that are referred to in the following description are shown in Fig. 1. It is to be appreciated that the device 101 could comprise additional components that are not shown in Fig. 1. For instance, the device 101 could comprise a power source, one or more transceivers and/or any other suitable components.

In some examples the device 101 could comprise means for causing motion of the LiDAR device 103. The means for causing motion of the LiDAR device 103 could be configured to cause motion of just the LiDAR device 103 and/or to cause motion of the whole of the device 101. In some examples the means for causing motion of the LiDAR device 103 could comprise one or more motors that can be configured to cause a vibration of the LiDAR device 103 and/or the device 101. This vibration can create relative movement between the LiDAR device 103 and the object 109 that is to be measured by the LiDAR device 103.

Fig. 2 shows an example apparatus 105. The apparatus 105 illustrated in Fig. 2 can be a chip or a chip-set. The apparatus 105 can be provided within a device 101 such as a mobile phone, personal electronics device or any other suitable type of device 101. In some examples the apparatus 105 could be provided within a vehicle or other device that monitors the objects 109 within the surroundings. The apparatus 105 could be provided within devices 101 as shown in Fig. 1.

In the example of Fig. 2 the apparatus 105 comprises a controller 203. In the example of Fig. 2 the implementation of the controller 203 can be as controller circuitry. In some examples the controller 203 can be implemented in hardware alone, have certain aspects in software including firmware alone or can be a combination of hardware and software (including firmware).

As illustrated in Fig. 2 the controller 203 can be implemented using instructions that enable hardware functionality, for example, by using executable instructions of a computer program 209 in a general-purpose or special-purpose processor 205 that can be stored on a computer readable storage medium (disk, memory etc.) to be executed by such a processor 205.

The processor 205 is configured to read from and write to the memory 207. The processor 205 can also comprise an output interface via which data and/or commands are output by the processor 205 and an input interface via which data and/or commands are input to the processor 205.

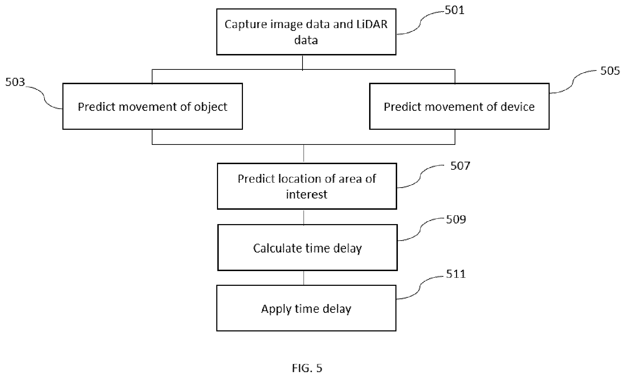

The memory 207 is configured to store a computer program 209 comprising computer program instructions (computer program code 211) that controls the operation of the apparatus 105 when loaded into the processor 205. The computer program instructions, of the computer program 209, provide the logic and routines that enable the apparatus 105 to perform the methods illustrated in Figs. 3 and 5. The processor 205 by reading the memory 207 is able to load and execute the computer program 209.

The apparatus 105 therefore comprises: at least one processor 205; and at least one memory 207 including computer program code 211, the at least one memory 207 and the computer program code 211 configured to, with the at least one processor 205, cause the apparatus 105 at least to perform:
detecting 301 relative movement between at least one object 109 and at least one LiDAR device 103 wherein the at least one LiDAR device 103 is configured to provide a measurement location projection pattern 111;
predicting 303 a location of at least one area of interest of the at least one object relative to the at least one LiDAR device 103 at a given time; and
adding 305 a delay to transmission of the measurement location projection pattern 111 so that one or more measurement locations of the measurement location projection pattern 111 are incident on the at least one area of interest of the at least one object 109 at the given time.

As illustrated in Fig. 2 the computer program 209 can arrive at the apparatus 105 via any suitable delivery mechanism 201. The delivery mechanism 201 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 209. The delivery mechanism can be a signal configured to reliably transfer the computer program 209. The apparatus 105 can propagate or transmit the computer program 209 as a computer data signal. In some examples the computer program 209 can be transmitted to the apparatus 105 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 209 comprises computer program instructions for causing an apparatus 105 to perform at least the following:
detecting 301 relative movement between at least one object 109 and at least one LiDAR device 103 wherein the at least one LiDAR device 103 is configured to provide a measurement location projection pattern 111;
predicting 303 a location of at least one area of interest of the at least one object relative to the at least one LiDAR device 103 at a given time; and
adding 305 a delay to transmission of the measurement location projection pattern 111 so that one or more measurement locations of the measurement location projection pattern 111 are incident on the at least one area of interest of the at least one object 109 at the given time.

The computer program instructions can be comprised in a computer program 209, a non-transitory computer readable medium, a computer program product, a machine readable medium. In some but not necessarily all examples, the computer program instructions can be distributed over more than one computer program 209.

Although the memory 207 is illustrated as a single component/circuitry it can be implemented as one or more separate components/circuitry some or all of which can be integrated/removable and/or can provide permanent/semi-permanent/ dynamic/cached storage.

Although the processor 205 is illustrated as a single component/circuitry it can be implemented as one or more separate components/circuitry some or all of which can be integrated/removable. The processor 205 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software might not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Figs. 3 and 5 can represent steps in a method and/or sections of code in the computer program 209. The illustration of a particular order to the blocks does not necessarily imply that there is a required or preferred order for the blocks and the order and arrangement of the block can be varied. Furthermore, it can be possible for some blocks to be omitted.

Fig. 3 shows an example method according to examples of the disclosure. The method could be implemented using an apparatus 105 and/or device 101 as described above or using any other suitable type of device or apparatus.

At block 301 the method comprises detecting relative movement between at least one object 109 and the LiDAR device 103. The relative movement can be caused by movement of the LiDAR device 103, movement of the device 101 that the LiDAR device 103 is comprised within, movement of the object 109 or any combination of these.

The LiDAR device 103 is configured to provide a measurement location projection pattern 111. The measurement location projection pattern 111 comprises a plurality of measurement locations that are transmitted by the LiDAR device 103. The measurement locations within the measurement location projection pattern 111 comprise areas of light. The areas of light can be arranged in a regular array or in any other suitable configurations.

The LiDAR device 103 can be configured to transmit the measurement location projection pattern 111 at predetermined intervals. The LiDAR device 103 can have a predetermined rate at which the measurement location projection pattern 111 is transmitted. The rate at which the measurement location projection pattern 111 is transmitted can be controlled by the apparatus 105 or by any other suitable means. The apparatus 105 can be configured to change the intervals between the transmission of successive measurement location projection patterns 111 in accordance with examples of the disclosure. For example, the apparatus 105 can be configured to introduce a delay into the transmission of a measurement location projection pattern 111. The delay can be added to the transmission of the measurement location projection pattern 111 by controlling power to the LiDAR device 103. In such examples the LiDAR device 103, or components of the LiDAR device can be turned on and off as determined by the delay.

Any suitable means can be used to detect the relative movement between the at least one object 109 and the LiDAR device 103. For instance, the movement can be detected by using any one or more of: images from the imaging device 107, information obtained from the LiDAR device 103, one or more motion sensors or any other suitable means.

At block 303 the method comprises predicting a location of at least one area of interest of the at least one object 109 relative to the at least one LiDAR device 103 at a given time.

The areas of interest can comprise areas of the object 109 in which there are more variations or information compared to other areas of the object 109. The areas of interest can comprise the areas of the object 109 that have the highest levels of complexity. The level of complexity can be related to the level of variation of depth within a given area. For example, if the object 109 comprises the face of a person, the area around the nose has a larger variation in depth compared to the cheeks. These areas are more complex and can comprise greater variations in depth. In such examples the areas of interest would comprise the areas around the nose.

In some examples the apparatus 105 can be configured to identify the at least one areas of interest of the at least one object 109. The apparatus 105 can be configured to identify the areas of the object 109 or the plurality of objects that provide the useful information. In some examples the apparatus 105 can also identify the areas of the object 109 that do not provide useful information or do not provide as much useful information. In some examples the apparatus 105 can be configured to identify the areas that are of interest and also the areas that are not of interest.

Any suitable means can be used to identify the one or more areas of interest. In some examples the apparatus 105 can be configured to obtain images from the imaging device 107. The apparatus 105 could then analyse these images, using pattern recognition, machine learning, computer vision techniques or any other suitable technique, to identify the one or more areas of interest. Other suitable means could be used to identify the areas of interest in other examples of the disclosure.

Once the one or more areas of interest of the object 109 is known and the movement of the object 109 has been detected any suitable means can be used to predict the location of the area of interest of the object 109 at a given time. The given time can be a time that is a short time interval ahead of the current time. For example, the given time could be a time that occurs in less than a second or in one or more second's time (for example, in several seconds' time).

Any suitable means, or combinations or means, can be used to predict the location of the areas of interest of the object 109.

In some examples the apparatus 105 can be configured to use images obtained by the imaging device 107 to predict the locations of areas of interest of the object 109 at the given point in time. For example, a plurality of images obtained by the imaging device 107 could be used to plot a trajectory of an object 109 and from that trajectory predict where the object 109 will be in a future point in time.

In some examples the images obtained by the imaging device 107 could indicate the location of other objects within the region around the object. This information could also be used when predicting the future position of the objects 109. For instance, it can be predicted that a person would walk around furniture or other obstacles rather than climb over them.

In some examples the apparatus 105 can be configured to use information obtained by the LiDAR device 103 to predict the locations of areas of interest of the object 109 at the given point in time. For example, information from the LiDAR device 103 can be used to plot a trajectory of an object 109 and from that trajectory predict the position of the area of interest at a future point in time.

In some examples the apparatus 105 can be configured to use information obtained by one or more sensors configured to measure movement of the LiDAR device 103 to predict the locations of areas of interest of the object 109 at the given point in time. In some examples the LiDAR device 103 itself could be moving. For instance, the user of the device 101 could be walking with the device 101 or a vibrator or other motor could be configured to cause movement of the device 101 or there could be any other suitable motion. In such examples, information from the sensors could be used to predict a trajectory of the LiDAR device 103.

In some examples the LiDAR device 103 could be provided within a vehicle. In such examples onboard vehicle data about the position and trajectory of the vehicle could be used to predict the positions of the object 109 relative to the LiDAR device 103. Such data could comprise data about the current velocity of the vehicle, data relating to a planned route of the vehicle and/or any other suitable data.

In examples where the object 109 is a person the location of the area of interest of the object 109 can be predicted using predictions based on human behaviour. In such examples patterns of human behaviour within a given environment can be established. The patterns can be established by monitoring the movements of people over time. For instance, it can be determined that when people walk in to a particular room or other environment they would tend to walk towards a particular location or object within the environment. Or in other examples if a person is performing a known activity such as a sport then this could be used to predict the movement or motion of the person. This information can then be used to predict the movements of the people within the environment.

In some examples the patterns of human behaviour could comprise complex movements such as hand movements. This could enable the examples of the disclosure to be used to recognize hand gestures or other similar inputs.

Once the location of the area of interest has been predicted for a given time then, at block 305, the method comprises adding a delay to transmission of the measurement location projection pattern 111 so that one or more measurement locations of the measurement location projection pattern 111 are incident on the at least one area of interest of the at least one object 109 at the given time. The delay that is added to the measurement location projection pattern 111 increases the time interval between the transmission of two successive measurement location projection patterns 111.This delay, in combination with the relative movement of the LiDAR device 103 and the object 109, adds a spatial shift to the measurement location projection pattern 111 so as to increase the proportion of measurement locations of the measurement location projection pattern 111 that are incident on the area of interest.

The delay that is to be added to the measurement location projection pattern 111 can be estimated using any suitable means. In some examples the delay that is to be added to the transmission of the measurement location projection pattern 111 can be estimated by calculating an expected position of the area of interest based on the object's 109 relative velocity to the LiDAR device. Once the expected position is determined then the method can comprise calculating a spatial shift for the measurement location projection pattern 111 based on this relative velocity and the current and desired projected measurement locations. Once the spatial shift has been calculated a corresponding time delay to produce the spatial shift can then be calculated.

The delay can be added to the transmission of the measurement location projection pattern 111 by any suitable means. In some examples the delay can be added to the transmission of the measurement location projection pattern 111 by controlling power to the LiDAR device 103. For instance, the LiDAR device 103, or components of the LiDAR device can be turned on and off as determined by the delay that has been calculated.

Once the delay has been added to the transmission of the measurement location projection pattern 111 this causes the measurement location projection pattern 111 to be transmitted at a given point in time. This can increase the gap between successive transmissions of the measurement location projection pattern 111. In some examples the apparatus 105, or any other suitable means, can be configured to interpolate between consecutive measurements detected by the LiDAR device to account for the delay added to the transmission of the measurement location projection pattern 111. The interpolation can be used to help to match information obtained from the LiDAR device 103 with other information such as images or videos obtained by the imaging device 107.

In some examples the delay added to the transmission of the measurement location projection pattern 111 can be limited to avoid excessive reduction in the temporal resolution of the data that can be obtained from the LiDAR device 103. If it is determined that the delay that is needed exceeds the threshold or limit then the adjustment in the timing of the transmission of the measurement location projection pattern 111 can be paused until it is possible to use a smaller delay that is within the threshold.

In some examples both the LiDAR device 103 and the object 109 could be stationary. In such examples the apparatus 105 could be configured to cause movement of the LiDAR device 103 so as to provide relative movement between the LiDAR device 103 and the object 109. For instance, a vibrator, or motor or other means for providing motion could be provided within the device 101. This could be controlled by the apparatus 105 to provide any movement as needed. For instance, the apparatus 105 could control the vibrations of the device 101 and so generate relative motion between the LiDAR device 103 and the object 109.

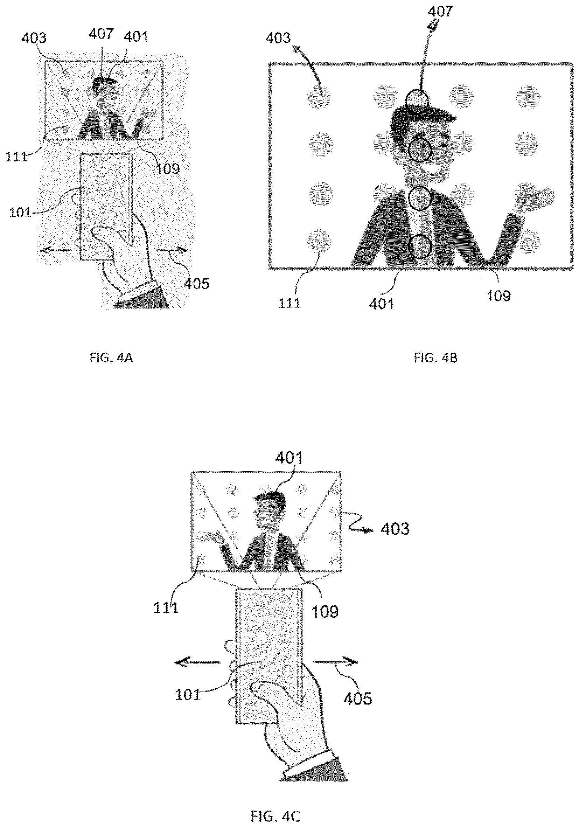

Figs. 4A to 4C show an example device 101 in use. In this example the device 101 is a phone or other hand-held user device. Other types of devices could be used in other examples of the disclosure. The LiDAR device 103 can be provided within the device 101 and so is not shown in Figs. 4A to 4C.

In Fig. 4A the object 109 that is to be measured by the LiDAR device 103 is a person 401. The person 401 is positioned in front of the device 101 so that, at least part of, the measurement location projection pattern 111 transmitted by the LiDAR device 103 is incident on the person 401. In this example, the area of interest of the person 401 could be the user's face. This is the part of the person 401 that can be used to enable the person to be identified or to provide any other suitable information.

In the example of Figs. 4A to 4C the measurement location projection pattern 111 is a dot projection pattern. The measurement locations 403 within the measurement location projection pattern 111 comprise a plurality of dots. The plurality of dots 403 are evenly spaced in a plurality of rows and columns. Other shapes and/or arrangements for the measurement locations 403 could be used in other examples of the disclosure.

In the example shown in Fig. 4A and 4B four rows and columns of the measurement location projection pattern 111 are shown. It is to be appreciated that the measurement location projection pattern 111 could comprise more measurement locations than this. It is also to be appreciated that the measurement location projection pattern 111 and the measurement locations 403 are not shown to scale in Figs. 4A to 4C.

In Fig. 4A the measurement locations 403 of the measurement location projection pattern 111 are shown. The person 401 is positioned relative to the device 101 so that the measurement locations 403 of the measurement location projection pattern 111 fall either side of the person's face. In such circumstances the amount of useful information that could be obtained from the LiDAR measurements could be limited.

Fig. 4A also shows the ideal measurement locations 407 based on the predicted location of the one or more areas of interest. The ideal measurement locations 407 are shown more clearly in Fig. 4B which is an enlarged view of the person 401 and the measurement location projection pattern 111. In Fig. 4B the ideal measurement locations 407 are shown as dots with a bold outline while the other measurement locations 403 are shown without the outline. As shown in Figs. 4A and 4B the ideal measurement locations 407 are aligned with the person's face.

In the example of Fig. 4A the device 101 and the person 401 are moving relative to each other as indicated by the arrows 405. This movement can cause a change in position of the person 401 relative to the device 101. The movement can be caused by the user of the device 101 moving their hand or by any other suitable means.

When the device 101 is moving the methods described herein can be applied to predict the location of the one or more areas of interest (in this example, the location of the person's face) relative to the LiDAR device 103 at a given point in time and use that information to estimate a delay that is to be added to the transmission of the measurement location projection pattern 111 so that at least some of the measurement locations 403 within the measurement location projection pattern 111 are shifted to the ideal measurement locations 407.

In Fig. 4C the person 401 and the device 101 have moved relative to each other compared to the example shown in Fig. 4A. In Fig 4C the person 401 is now facing in a different direction. In Fig. 4C the delay has been added to the measurement location projection pattern 111. The delay can be added by implementing an on/off sequence for the LiDAR device 103 or by any other suitable means.

The delay to the transmission of the measurement location projection pattern 111 has generated a spatial shift in the position of the measurement locations 403 relative to the person 401. The spatial shift is such that some of the measurement locations 403 now fall within the area of interest of the person. In this case, at least some of, the measurement locations 403 are incident on the person's face. This can enable the LiDAR measurements to obtain information from the person's face. This causes more measurement locations 403 to be incident on the one or more areas of interest than otherwise would be without the delay and this can provide for more accurate and reliable information from the LiDAR measurements.

In some examples the effects provided by the examples of the disclosure can increase over time as a plurality of different delays are provided to the transmission of a plurality of measurement location projection patterns 111 on a plurality of different occasions. In such examples the relative movement of the object 109 and the LiDAR device 103 can be monitored over the time period for which the plurality of measurement location projection patterns 111 are transmitted. This can enable a larger number of measurement locations 403 to be incident on the area of interest and so can increase the resolution of the data obtained by the LiDAR device 103.

In the example of Figs. 4A to 4C the relative movement between the person 401 and the LiDAR device 103 can be generated by the user moving the device 101 and/or by the person 401 moving. In other examples there might not be any relative movement between the person 401 and the device 101. In such examples, in order to generate the relative movement a vibrator or other motor can be configured to vibrate the device 101. This can cause movement of the device 101 and/or the LiDAR device 103 as required.

Fig. 5 shows another example method that could be implemented using the apparatus 105 and devices 101 described herein.

At block 501 the method comprises capturing image data and LiDAR data. The captured image data and LiDAR data can be used to determine information about one or more objects 109 within the environment around the device 101. For example, it can be used to determine the location and/or movement of the objects 109. The image data can be obtained using the imaging device 107 of the device 101 and/or any other suitable means. The LiDAR data can be obtained using the LiDAR device 103 of the device 101 and/or any other suitable means.

At block 503 movement of one or more objects 109 within the environment around the device 101 is predicted. Any suitable means or combination of means can be used to predict movement of the objects 109. For instance, a trajectory of an object 109 could be plotted based on previous motion of the object 109. In examples where the objects 109 comprise a person or people then human behaviour patterns could be used to predict the motion of the person or people.

At block 505 the movement of the device 101 can be predicted. The movement of the device 101 can be predicted based on one or more motion sensors such as accelerometers, or any other suitable means. In some examples the apparatus 105 can be configured to cause the movement of the device 101, for example the apparatus 105 can be configured to activate a motor or vibrator to cause vibration of the device 101. In such examples the movement of the device 101 can be predicted from the activation of the motor or the vibrator. In some examples the movement of the LiDAR device 103 could be provided by a motorized configurable device 101. For example, the device can be configured to allow for rolling, sliding, folding or other movements of a portion of the device 101 comprising the LiDAR device 103. This reconfiguration can be controlled by a motor or any other suitable means.

In some examples the movement of the device 101 can be predicted from the context of the device 101 and models or patterns of behaviour from the device 101, or other devices, in similar contexts. For instance, if it is determined that the user of the device is performing a gesture that could comprise moving the device 101 as they hold it, then this context information could be used to predict motion of the device 101. Similarly if it is determined that the user of the device 101 is sitting down then this context would correspond to different expected movements compared to a user who is walking or standing.

The information obtained at block 503 and 505 can be combined to obtain relative motion of the object 109 relative to the device 101. At block 507 this information can be used to predict a location of an area of interest of an object 109 relative to the LiDAR device at a future point in time. This predicted location of the area of interest provides an indication of the desired location for one or more measurement locations 403 at the given point in time.

At block 509 the time delay that needs to be applied to the measurement location projection pattern 111 is calculated. The time delay is calculated so that when the time delay is added to the measurement location projection pattern 111, at least some of the measurement locations 403 are incident on the desired location. The delay can be determined by estimating the spatial shift that needs to be applied to the measurement location projection pattern 111 so that, at least some of the measurement locations 403 are incident on the desired location.

At block 511 the time delay is applied to the transmission of the measurement location projection pattern 111. The time delay can be applied by controlling power to the LiDAR device 103 or by any other suitable means. Once the delay is added the measurement locations 403 are then incident on the desired location (one or more areas of interest). This can enable more detailed measurements of the object 109 or plurality of objects 109 to be made.

In the examples shown in the Figures the LiDAR device 103 is being used to measure a single object 109. It is to be appreciated that in other examples of the disclosure the LiDAR device 103 could be used to measure a plurality of different objects 109. For example, there could be a plurality of people or other objects 109 within the environment around the device 101. In such examples the apparatus 105 can be configured to detect relative movement between the plurality of objects 109 and the LiDAR device 103. This relative movement can be used to predict a location of at least one area of interest for at least some of the plurality of objects 109. In some examples the location of an area of interest could be predicted for all of the objects 109. In some examples the location of an area of interest could be predicted for just a sub-set of the objects 109. Once the location of the areas of interest have been predicted a delay is added to transmission of the measurement location projection pattern 111. The delay is added so as to optimise, or substantially optimise, the incidence of measurement locations 403 from the measurement location projection pattern 111 on the areas of interest for the at least some of the plurality of objects 109. For instance, it might not be possible for the measurement locations 403 to be incident on an area of interest for all of the objects 109, or for all of the objects 109 within a subset. In such examples the delay can be added to the transmission of the measurement location projection pattern 111 so that as many measurement locations 403 as possible are incident on the areas of interest.

In other examples where a plurality of objects 109 are to be measured then instead of optimising the delay for the plurality of objects 109 as a whole, the delay could be optimised for each object 109 sequentially. This could lead to a plurality of different delays being added to the transmission of the measurement location projection pattern 111 at different capture instances.

In the examples described herein the object 109 has been a person or part of a person. Other types of objects 109 could be measured in other examples of the disclosure. For example, the object 109 could be vehicles or other devices. The measurement of these objects could be used to enable collisions to be avoided. In some examples the objects could comprise animals or other wildlife. In such examples, patterns of behaviour for the animals or wildlife could be used to predict the future location of the object 109 or the area of interest of the object 109. This could help to avoid collisions with the animal or wildlife and/or could enable other useful data to be obtained. In some examples the objects could be inanimate objects that could be moved during their use, for example tools could be used during construction or home improvements that could have one or more moving parts that could be measured using examples of the disclosure.

Examples of the disclosure therefore provide for a method of enabling more accurate or informative measurements of objects 109 to be obtained using a LiDAR device 103. As the additional information can be obtained by applying a delay to the transmission of the measurement location projection pattern 111 there are no changes that need to be made to the hardware of the LiDAR device 103. Examples of the disclosure could therefore be implemented using any suitable LiDAR devices 103.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

## Claims

1. An apparatus (105) comprising means for:
detecting (301) relative movement between at least one object (109) and at least one LiDAR device (103) controlled by the apparatus (105), wherein the at least one LiDAR device (103) is configured to provide a measurement location projection pattern (111);
predicting (303) a location of at least one area of interest of the at least one object (109) relative to the at least one LiDAR device (103) at a given time; and
adding (305) a delay to transmission of the measurement location projection pattern (111) so that one or more measurement locations of the measurement location projection pattern (111) are incident on the at least one area of interest of the at least one object (109) at the given time.

2. An apparatus as claimed in claim 1 wherein the means are for identifying the at least one areas of interest of the at least one object.

3. An apparatus as claimed in any preceding claim wherein the means are for using images obtained by an imaging device to predict the location of the at least one area of interest of the at least one object.

4. An apparatus as claimed in any preceding claim wherein the means are for using information obtained from the at least one LiDAR device to predict the location of the at least one area of interest of the at least one object.

5. An apparatus as claimed in any preceding claim wherein the at least one object comprises at least part of a person and the location of the area of interest of at least one object is predicted using predictions based on human behaviour.

6. An apparatus as claimed in any preceding claim wherein the location of the at least one area of interest relative to the at least one LiDAR device is estimated using information obtained from one or more sensors configured to measure movement of the at least one LiDAR device.

7. An apparatus as claimed in any preceding claim wherein the means are for estimating the delay to be added to the transmission of the measurement location projection pattern by calculating one or more expected positions of the at least one area of interest based on the relative velocity between the at least one object and the LiDAR device, calculating a spatial shift for the measurement location projection pattern based on this relative velocity and the current and desired projected measurement locations, and calculating a corresponding time delay to produce the spatial shift.

8. An apparatus as claimed in any preceding claim comprising means for causing movement of at least part of the at least one LiDAR device to provide relative movement between the at least one object and the at least one LiDAR device.

9. An apparatus as claimed in any preceding claim wherein the means are for detecting relative movement between a plurality of objects and the at least one LiDAR device and predicting a location of at least one area of interest for at least some of the plurality of objects and adding a delay to transmission of the measurement location projection pattern to optimise the incidence of measurement locations from the measurement location projection pattern on the areas of interest for the at least some of the plurality of objects.

10. An apparatus as claimed in any preceding claim wherein the means are for interpolating between consecutive measurements detected by the at least one LiDAR device to account for the delay added to the transmission of the measurement location projection pattern.

11. An apparatus as claimed in any preceding claim wherein the measurement location projection pattern comprises an array of evenly spaced measurement locations.

12. A method comprising:
detecting (301) relative movement between at least one object (109) and at least one LiDAR device (103) wherein the at least one LiDAR device (103) is configured to provide a measurement location projection pattern (111);
predicting (303) a location of at least one area of interest of the at least one object (109) relative to the at least one LiDAR device (103) at a given time; and
adding (305) a delay to transmission of the measurement location projection pattern (111) so that one or more measurement locations of the measurement location projection pattern (111) are incident on the at least one area of interest of the at least one object (109) at the given time.

13. A method as claimed in claim 12 comprising identifying the at least one areas of interest of the at least one object.

14. A computer program (209) comprising computer program instructions that, when executed by an apparatus as claimed in any of claims 1 to 11, cause:
detecting (301) relative movement between at least one object (109) and at least one LiDAR device (103) wherein the at least one LiDAR device (103) is configured to provide a measurement location projection pattern (111);
predicting (303) a location of at least one area of interest of the at least one object (109) relative to the at least one LiDAR device (103) at a given time; and
adding (305) a delay to transmission of the measurement location projection pattern (111) so that one or more measurement locations of the measurement location projection pattern (111) are incident on the at least one area of interest of the at least one object (109) at the given time.

15. A computer program as claimed in claim 14 wherein the computer program instructions, when executed by processing circuity cause identifying the at least one areas of interest of the at least one object.

## Patentansprüche

1. Einrichtung (105), die Mittel für Folgendes umfasst:
Detektieren (301) einer relativen Bewegung zwischen mindestens einem Objekt (109) und mindestens einer LIDAR-Vorrichtung (103), die von der Einrichtung (105) gesteuert wird, wobei die mindestens eine LiDAR-Vorrichtung (103) dazu ausgelegt ist, ein Messortprojektionsmuster (111) bereitzustellen;
Vorhersagen (303) eines Ortes von mindestens einem Bereich von Interesse des mindestens einen Objekts (109) relativ zu der mindestens einen LiDAR-Vorrichtung (103) zu einer gegebenen Zeit; und
Hinzufügen (305) einer Verzögerung zu einer Übertragung des Messortprojektionsmusters (111), derart, dass in dem mindestens einen Bereich von Interesse des mindestens einen Objekts (109) ein oder mehrere Messorte des Messortprojektionsmusters (111) zu der gegebenen Zeit vorliegen.

2. Einrichtung nach Anspruch 1, wobei die Mittel dem Identifizieren der mindestens einen Bereiche von Interesse des mindestens einen Objekts dienen.

3. Einrichtung nach einem der vorhergehenden Ansprüche, wobei die Mittel dem Verwenden von Bildern dienen, die von einer Bildgebungsvorrichtung erhalten werden, um den Ort des mindestens einen Bereichs von Interesse des mindestens einen Objekts vorherzusagen.

4. Einrichtung nach einem der vorhergehenden Ansprüche, wobei die Mittel dem Verwenden von Informationen dienen, die von der mindestens einen LiDAR-Vorrichtung erhalten werden, um den Ort des mindestens einen Bereichs von Interesse des mindestens einen Objekts vorherzusagen.

5. Einrichtung nach einem der vorhergehenden Ansprüche, wobei das mindestens eine Objekt mindestens einen Teil einer Person umfasst und der Ort des Bereichs von Interesse von mindestens einem Objekt unter Verwendung von Vorhersagen auf Basis eines menschlichen Verhaltens vorhergesagt wird.

6. Einrichtung nach einem der vorhergehenden Ansprüche, wobei der Ort des mindestens einen Bereichs von Interesse relativ zu der mindestens einen LiDAR-Vorrichtung unter Verwendung von Informationen geschätzt wird, die von einem oder mehreren Sensoren erhalten werden, die dazu ausgelegt sind, eine Bewegung der mindestens einen LiDAR-Vorrichtung zu messen.

7. Einrichtung nach einem der vorhergehenden Ansprüche, wobei die Mittel dem Schätzen der Verzögerung dienen, die durch Berechnen von einer oder mehreren erwarteten Positionen des mindestens einen Bereichs von Interesse auf Basis der relativen Geschwindigkeit zwischen dem mindestens einen Objekt und der LiDAR-Vorrichtung, Berechnen einer räumlichen Verschiebung für das Messortprojektionsmuster auf Basis der relativen Geschwindigkeit und der aktuellen und der gewünschten projizierten Messorte und Berechnen einer entsprechenden Zeitverzögerung, um die räumliche Verschiebung zu produzieren, zur Übertragung des Messortprojektionsmusters hinzuzufügen ist.

8. Einrichtung nach einem der vorhergehenden Ansprüche, die Mittel zum Veranlassen einer Bewegung von mindestens einem Teil der mindestens einen LiDAR-Vorrichtung umfasst, um eine relative Bewegung zwischen dem mindestens einen Objekt und der mindestens einen LiDAR-Vorrichtung bereitzustellen.

9. Einrichtung nach einem der vorhergehenden Ansprüche, wobei die Mittel dem Detektieren einer relativen Bewegung zwischen einer Vielzahl von Objekten und der mindestens einen LiDAR-Vorrichtung und dem Vorhersagen eines Ortes von mindestens einem Bereich von Interesse für mindestens einige der Vielzahl von Objekten und dem Hinzufügen einer Verzögerung zu einer Übertragung des Messortprojektionsmusters dienen, um das Vorkommen von Messorten aus dem Messortprojektionsmuster in den Bereichen von Interesse für die mindestens einigen der Vielzahl von Objekten zu optimieren.

10. Einrichtung nach einem der vorhergehenden Ansprüche, wobei die Mittel dem Interpolieren zwischen aufeinanderfolgenden Messungen, die von der mindestens einen LiDAR-Vorrichtung detektiert werden, dienen, um die zur Übertragung des Messortprojektionsmusters hinzugefügte Verzögerung zu berücksichtigen.

11. Einrichtung nach einem der vorhergehenden Ansprüche, wobei das Messortprojektionsmuster ein Array von gleichmäßig beabstandeten Messorten umfasst.

12. Verfahren, das Folgendes umfasst:
Detektieren (301) einer relativen Bewegung zwischen mindestens einem Objekt (109) und mindestens einer LiDAR-Vorrichtung (103), wobei die mindestens eine LiDAR-Vorrichtung (103) dazu ausgelegt ist, ein Messortprojektionsmuster (111) bereitzustellen;
Vorhersagen (303) eines Ortes von mindestens einem Bereich von Interesse des mindestens einen Objekts (109) relativ zu der mindestens einen LiDAR-Vorrichtung (103) zu einer gegebenen Zeit; und
Hinzufügen (305) einer Verzögerung zu einer Übertragung des Messortprojektionsmusters (111), derart, dass in dem mindestens einen Bereich von Interesse des mindestens einen Objekts (109) ein oder mehrere Messorte des Messortprojektionsmusters (111) zu der gegebenen Zeit vorliegen.

13. Verfahren nach Anspruch 12, das das Identifizieren des mindestens einen Bereichs von Interesse des mindestens einen Objekts umfasst.

14. Computerprogramm (209), das Computerprogrammanweisungen umfasst, die, wenn sie von einer Einrichtung nach einem der Ansprüche 1 bis 11 ausgeführt werden, Folgendes veranlassen:
Detektieren (301) einer relativen Bewegung zwischen mindestens einem Objekt (109) und mindestens einer LiDAR-Vorrichtung (103), wobei die mindestens eine LiDAR-Vorrichtung (103) dazu ausgelegt ist, ein Messortprojektionsmuster (111) bereitzustellen;
Vorhersagen (303) eines Ortes von mindestens einem Bereich von Interesse des mindestens einen Objekts (109) relativ zu der mindestens einen LiDAR-Vorrichtung (103) zu einer gegebenen Zeit; und
Hinzufügen (305) einer Verzögerung zu einer Übertragung des Messortprojektionsmusters (111), derart, dass in dem mindestens einen Bereich von Interesse des mindestens einen Objekts (109) ein oder mehrere Messorte des Messortprojektionsmusters (111) zu der gegebenen Zeit vorliegen.

15. Computerprogramm nach Anspruch 14, wobei die Computerprogrammanweisungen, wenn sie von einer Verarbeitungsschaltung ausgeführt werden, das Identifizieren des mindestens einen Bereichs von Interesse des mindestens einen Objekts veranlassen.

## Revendications

1. Appareil (105) comprenant des moyens pour :
détecter (301) un déplacement relatif entre au moins un objet (109) et au moins un dispositif LiDAR (103) commandé par l'appareil (105),
dans lequel l'au moins un dispositif LiDAR (103) est configuré pour fournir un motif de projection d'emplacement de mesure (111) ;
prédire (303) un emplacement d'au moins une zone d'intérêt de l'au moins un objet (109) par rapport à l'au moins un dispositif LiDAR (103) à un moment donné ; et
ajouter (305) un délai à la transmission du motif de projection d'emplacement de mesure (111) de sorte qu'un ou plusieurs emplacements de mesure du motif de projection d'emplacement de mesure (111) soient incidents sur l'au moins une zone d'intérêt de l'au moins un objet (109) audit moment donné.

2. Appareil selon la revendication 1, dans lequel les moyens doivent identifier l'au moins une zone d'intérêt de l'au moins un objet.

3. Appareil selon l'une des revendications précédentes, dans lequel les moyens doivent utiliser des images obtenues par un dispositif d'imagerie pour prédire l'emplacement de l'au moins une zone d'intérêt de l'au moins un objet.

4. Appareil selon l'une des revendications précédentes, dans lequel les moyens doivent utiliser des informations obtenues à partir de l'au moins un dispositif LiDAR pour prédire l'emplacement de l'au moins une zone d'intérêt de l'au moins un objet.

5. Appareil selon l'une des revendications précédentes, dans lequel l'au moins un objet comprend au moins une partie d'une personne, et l'emplacement de la zone d'intérêt d'au moins un objet est prédit à l'aide de prédictions basées sur un comportement humain.

6. Appareil selon l'une des revendications précédentes, dans lequel l'emplacement de l'au moins une zone d'intérêt par rapport à l'au moins un dispositif LiDAR est estimé à l'aide d'informations obtenues à partir d'un ou plusieurs capteurs configurés pour mesurer le déplacement de l'au moins un dispositif LiDAR.

7. Appareil selon l'une des revendications précédentes, dans lequel les moyens doivent estimer le délai à ajouter à la transmission du motif de projection d'emplacement de mesure en calculant une ou plusieurs positions attendues de l'au moins une zone d'intérêt sur la base de la vitesse relative entre l'au moins un objet et le dispositif LiDAR, en calculant un décalage spatial pour le motif de projection d'emplacement de mesure sur la base de cette vitesse relative et des emplacements de mesure projetés actuels et souhaités, et en calculant un délai de temps correspondant pour produire le décalage spatial.

8. Appareil selon l'une des revendications précédentes comprenant des moyens pour provoquer le déplacement d'au moins une partie de l'au moins un dispositif LiDAR pour fournir un déplacement relatif entre l'au moins un objet et l'au moins un dispositif LiDAR.

9. Appareil selon l'une des revendications précédentes, dans lequel les moyens doivent détecter un déplacement relatif entre une pluralité d'objets et l'au moins un dispositif LiDAR et prédire un emplacement d'au moins une zone d'intérêt pour au moins certains de la pluralité d'objets, et ajouter un délai à la transmission du motif de projection d'emplacement de mesure pour optimiser l'incidence d'emplacements de mesure à partir du motif de projection d'emplacement de mesure sur la zone d'intérêt pour lesdits au moins certains de la pluralité d'objets.

10. Appareil selon l'une des revendications précédentes, dans lequel les moyens doivent effectuer une interpolation entre des mesures consécutives détectées par l'au moins un dispositif LiDAR pour tenir compte du délai ajouté à la transmission du motif de projection d'emplacement de mesure.

11. Appareil selon l'une des revendications précédentes, dans lequel le motif de projection d'emplacement de mesure comprend un réseau d'emplacements de mesure régulièrement espacés.

12. Procédé comprenant :
la détection (301) d'un déplacement relatif entre au moins un objet (109) et au moins un dispositif LiDAR (103) dans lequel l'au moins un dispositif LiDAR (103) est configuré pour fournir un motif de projection d'emplacement de mesure (111) ;
la prédiction (303) d'un emplacement d'au moins une zone d'intérêt de l'au moins un objet (109) par rapport à l'au moins un dispositif LiDAR (103) à un moment donné ; et
l'ajout (305) d'un délai à la transmission du motif de projection d'emplacement de mesure (111) de sorte qu'un ou plusieurs emplacements de mesure du motif de projection d'emplacement de mesure (111) soient incidents sur l'au moins une zone d'intérêt de l'au moins un objet (109) audit moment donné.

13. Procédé selon la revendication 12, comprenant l'identification de l'au moins une zone d'intérêt de l'au moins un objet.

14. Programme informatique (209) comprenant des instructions de programme informatique qui, lorsqu'elles sont exécutées par un appareil selon l'une des revendications 1 à 11, provoquent :
la détection (301) d'un déplacement relatif entre au moins un objet (109) et au moins un dispositif LiDAR (103) dans lequel l'au moins un dispositif LiDAR (103) est configuré pour fournir un motif de projection d'emplacement de mesure (111) ;
la prédiction (303) d'un emplacement d'au moins une zone d'intérêt de l'au moins un objet (109) par rapport à l'au moins un dispositif LiDAR (103) à un moment donné ; et
l'ajout (305) d'un délai à la transmission du motif de projection d'emplacement de mesure (111) de sorte qu'un ou plusieurs emplacements de mesure du motif de projection d'emplacement de mesure (111) soient incidents sur l'au moins une zone d'intérêt de l'au moins un objet (109) audit moment donné.

15. Programme informatique selon la revendication 14, dans lequel les instructions de programme informatique, lorsqu'elles sont exécutées par une circuiterie de traitement, entraînent l'identification de l'au moins une zone d'intérêt de l'au moins un objet.
